# EUROPEAN PATENT APPLICATION

(11) **EP 2 952 868 A1**
(43) Date of publication of application: **09.12.2015**
(21) Application number: 14746770.8
(22) Date of filing: 04.02.2014
(51) Int. Cl.: G01M 3/16, G01N 27/04

(54) **DEVICE FOR DETECTING LEAKAGE OF ACIDIC SOLUTION**

(30) Priority: 04.02.2013 KR 20130012288; 24.09.2013 KR 20130113039
(71) Applicant: Yumin System Technology Co. Ltd., Anyang-si, Gyeonggi-do 430-857 (KR); Yu, Hong Geun, Gyeonggi-do 441-759 (KR)
(72) Inventor: YU, Hong Geun, Suwon-si Gyeonggi-do 441-759 (KR)
(74) Representative: von Hirschhausen, Helge
(86) International application number: PCT/KR2014/000932
(87) International publication number: WO 2014/119974

(57) **Abstract**

The present invention relates to a device for detecting a leakage of an acidic solution, and more particularly to a device for detecting a leakage of a poisonous acidic solution such as sulfuric acid, hydrochloric acid, nitric acid, hydrofluoric acid, etc. To this end, the device according to the present invention comprises: a base film layer; a pair of conductive lines formed lengthwise in parallel with each other on the upper surface of the base film layer; and a coating layer made of an acid-soluble material applied to the upper surface of the base film layer so as to cover the conductive lines.

## Description

### Technical Field

The present invention relates to a device for detecting a leakage of an acidic solution, and more particularly to a device for detecting a leakage of a poisonous acidic chemical solution, for example, sulfuric acid, hydrochloric acid, nitric acid, hydrofluoric acid, etc.

### Background Art

In the Korean patent registration numbers 10-0909242 and 10-0827385, the applicant of the present invention disclosed a tape type leakage detection sensor which is made in a tape type and allows to easily detect any leakage by installing it at a portion where leakage may occur.

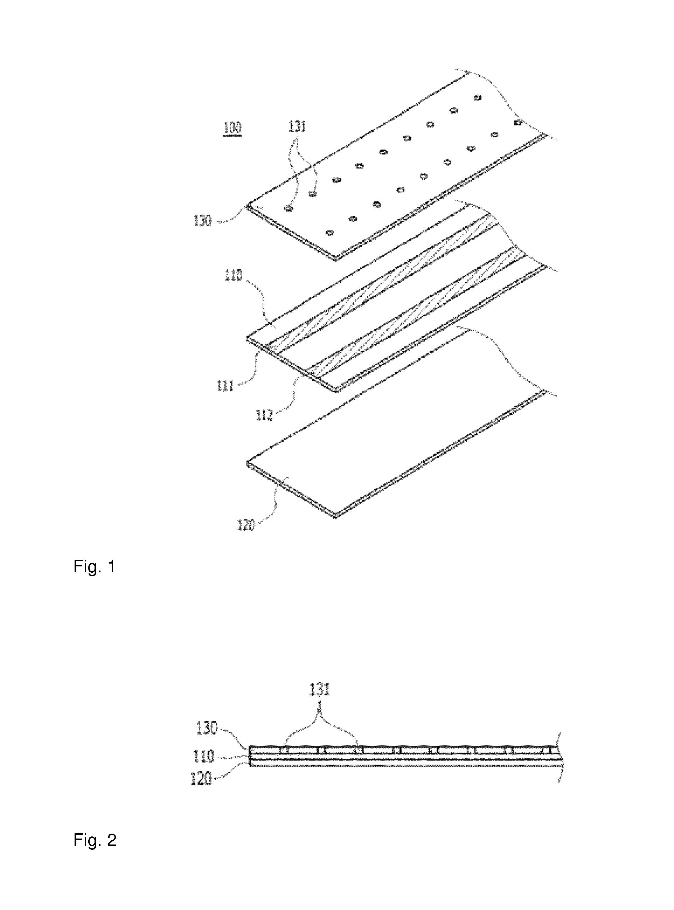

Referring to Figures 1 and 2, the leakage detection sensor 100 includes a lower adhering layer 120, a base film layer 110, and an upper protection film layer 130, which are sequentially laminated from bottom to top.

The lower adhering layer 120 will be adhered to a portion where leakage may occur and is formed in an adhering tape form. The base film layer 110 is a layer on which conductive lines 111 and 112 are intended to be formed. The base film layer 110 is made of a film material of PET, PE, PTFE, PVC or other Teflon materials so as to print-form a pattern of the conductive lines 111 and 112.

In addition, the conductive lines 111 and 112 are formed spaced at a predetermined distance from the upper surface of the base film layer 110 lengthwise in parallel and are arranged in a strip shape and are printed with a conductive ink or a silver compound.

The upper protection film layer 130 is laminated on the top of the base film layer 110 so as to protect the conductive lines 111 and 112 from external impacts. Like the base film layer 110, the upper protection film layer 130 is made of a film material of PET, PE, PTFE, PVC or other Teflon materials. Passing-through sensing holes 131 are formed at regular intervals at the portions corresponding to the conductive lines 111 and 112.

Therefore, if leakage occurs, moisture may input through the sensing holes 131 of where the leakages have occurred, so the two conductive lines 111 and 112 become conductive by with the aid of moisture, and a distant controller can detect any leakage by checking a conducting state, more specifically, a state where closed circuits are formed, thus generating alarm.

The conventional film type leakage detection sensor 100 can detect a poisonous acidic chemical solution, for example, sulfuric acid, hydrochloric acid, nitric acid, hydrofluoric acid, etc. which are all conductive. If it is installed at an outdoor storing tank or a pipe wherein acidic liquid is stored and is used to detect any leakage of acidic solution, error operations may occur since alarming may occur even when the conventional film type leakage detection sensor 100 exposes to moisture, rain water, dew formation, snow, vapor, etc.

In addition, if the base film layer 110 and the conductive lines 111 and 112 dissolve by any acidic solution, leakage detection of any strongly acidic solution may become impossible.

### Disclosure of Invention

Accordingly, the present invention is made in an effort to resolve the above problems. It is an object of the present invention to provide a device for detecting leakage of acidic solution which is configured to operate as conductive lines become conductive only when acidic solution leakages.

It is another object of the present invention to provide a device for detecting leakage of acidic solution wherein a base film layer is made of a film material, which does not dissolve by strongly acidic solution, and conductive lines are made of materials which don't dissolve by a strongly acidic solution, thus allowing to obtain accurate detection of a strongly acidic solution.

To achieve the above objects, there is provided a device for detecting a leakage of acidic solution, which may include, but is not limited to, a base film layer which is made of a film material; a pair of conductive lines which are formed lengthwise in parallel with each other on an upper surface of the base film layer; and a coating layer which is coated on an upper surface of the base film layer so that the conductive lines don't expose to the outside by a substance which is dissolved by the acidic solution.

To achieve the above objects, there is provided a device for detecting a leakage of strongly acidic solution, which may include, but is not limited to, a base film layer which is made of a film material; a pair of conductive lines which are formed lengthwise in parallel with each other on an upper surface of the base film layer, wherein the base film layer is made of a synthetic resin, and the conductive lines are made in such a way that 60∼90% by weight of a CNT (Carbon Nano Tube) dispersion and 10∼50% by weight of an acryl alkyd resin mixed with a volatile solvent are mixed and printed by a printing method.

In addition, the CNT dispersion is formed by mixing 1∼10% by weight of a CNT powder, 80∼98% by weight of an ethyl cellosolve solvent and 1∼10% by weight of a nonionic surfactant dispersion.

### Advantageous effects

The device for detecting leakage of acidic solution according to the present invention becomes conductive since it reacts with only acidic solution. If the device of the present invention is installed at an acidic, poisonous substance storing facility or transportation facility, only acidic components can be accurately detected. In addition, the device of the present invention is formed in a tape type, which may contribute to easier installation, for example, at a pipe or the like. Manufacturing does not cost a lot, and price competition is good.

### Brief Description of Drawings

Figures 1 and 2 are views illustrating a configuration of a conventional leakage detection device.
Figure 3 is a view illustrating a configuration of a device for detecting a leakage of acidic solution according to the present invention.
Figure 4 is a side cross sectional view illustrating a laminated configuration in the present invention.
Figures 5 and 6 are views for describing a procedure wherein conduction is made by an acidic solution.
Figure 7 is a view illustrating a device for detecting a leakage of acidic solution according to another exemplary embodiment of the present invention.
Figure 8 is a view illustrating a device for detecting a leakage of acidic solution according to further another exemplary embodiment of the present invention.

### Best modes for carrying out the invention

The present invention will be described with reference to the accompanying drawings.

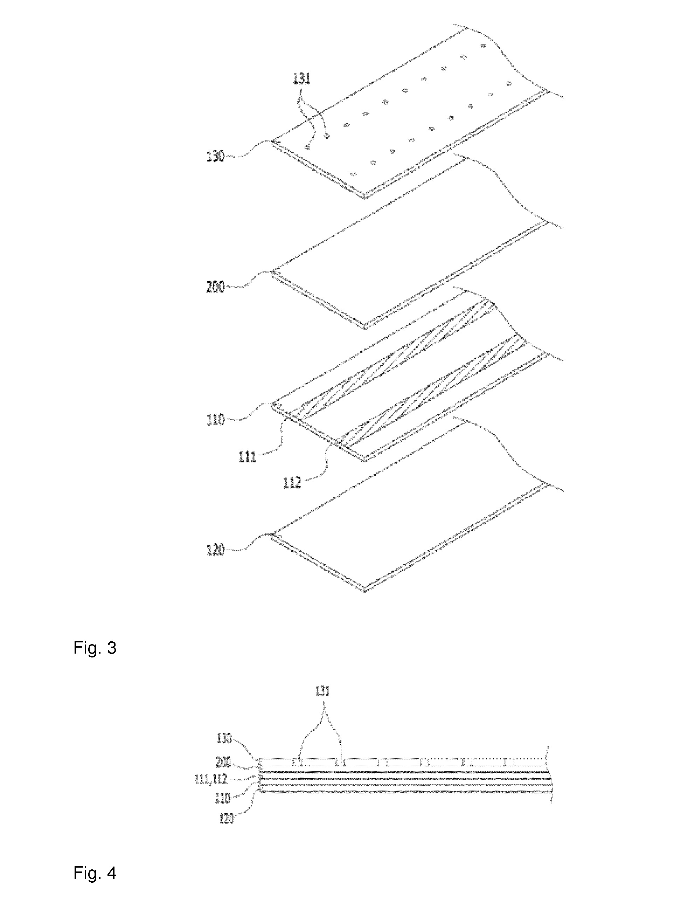

Figure 3 is a view illustrating a configuration of the present invention, and Figure 4 is a side cross sectional view of the present invention. The configuration of the base film layer 110, the adhering layer 120 and the upper protection film layer 130 are same as in the conventional device, so the coating layer 200 corresponding to one of the key subject matters of the present invention will be described in details hereinafter.

First, acidic solution, which is a poison, has an electrical conduction like water, and if such an acidic solution leaks into soil or air, water contamination, soil contamination, air contamination, etc. may occur, thus causing any physical damages or damages to people.

For this reason, it needs to detect any leakage of such an acidic solution quickly and at low cost. To this end, the present invention may be configured in the way that a coating layer 200 which may be easily dissolved by a strongly acidic poisonous chemical solution, for example, sulfuric acid, hydrochloric acid, nitric acid, hydrofluoric acid, etc. may be formed on an upper surface of the base film layer 110 on which conductive lines 111 and 112 are formed. This coating layer 200 may be formed on the whole upper surfaces of the base film layer 110 or may be coated only on the portion where the conductive lines 111 and 112 are formed so as to isolate only the conductive lines 111 and 112 from the outside.

It is preferred that the coating layer 200 may be coated in such a way that enamel, melanin, urethane, other synthetic resin, etc., which can be easily dissolved by acid solution, is sprayed coated in a thin membrane shape.

The upper side protection film layer 130 in which the sensing holes 131 are formed may be laminated on the top of the coating layer 200. Here, the upper side protection film layer 130 may be selectively laminated.

Namely, it is preferred that the upper side protection film layer 130 may be laminated so as to protect the coating layer 200 in case of an outdoor space which external environment influences a lot. In the indoor space, the upper side protection film layer 130 may be laminated or may not be laminated according to situations given.

The present invention will be described with an example wherein the upper side protection film layer 130 is laminated.

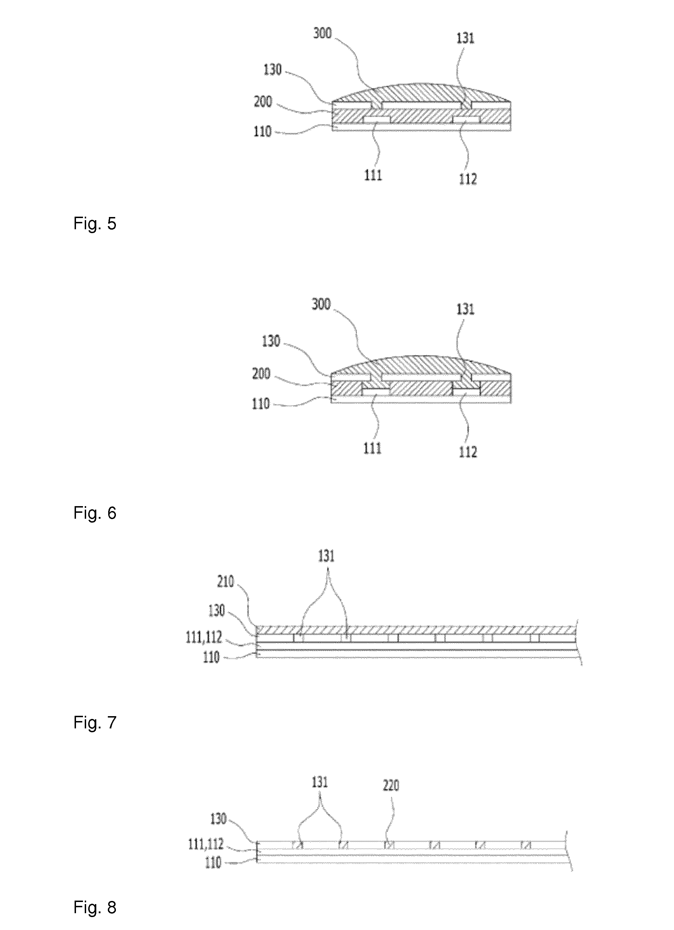

If the device of the present invention is installed attached to a joint portion of pipe through which acidic solution flows or to an outer surface of a storing tank or is installed wound around the same, the acidic solution may leak, and the acidic solution 300, as illustrated in Figure 5, may position on the upper surface of the upper protection film layer 130 of the present invention and may input into the sensing holes 131, so the coating layer 200 may be dissolved by the acidic solution, which hence allows for conductions of the conductive lines 111 and 112.

The distant controller may be configured to confirm the above conductive state and the leakage of the acidic solution.

Figure 7 is a view of another exemplary embodiment of the present invention and is a view illustrating a configuration wherein a coating layer 210 is formed on an upper surface of an upper side protection film layer 130.

In case where acidic solution has leaked, the leaked acidic solution may dissolve the coating layer 210, which is the upper most layer, is dissolved, and input through the sensing holes 131, thus allowing for conduction of the conductive lines 111 and 112, which makes it possible to detect leakage.

Figure 8 is a view of further another exemplary embodiment of the present invention. In this embodiment, a coating portion 220 may be formed filling only the sensing holes 131, not coated on the whole portions of the base film layer 110 or the upper side protection film layer 130. In this configuration, the acidic solution will dissolve the coating portion 220, thus allowing for conduction of the conductive lines 111 and 112.

In the configurations in Figures 7 and 8, it is possible to easily manufacture a device for detecting leakage of acidic solution by adding only a process for coating a coating solution on the upper surface of the upper side protection film layer 130 or a process for filling only the sensing holes with a coating solution by directly using the conventional leakage detection sensor 100 which has been already laminated is finished in the conventional way.

It is most preferred that the configuration in Figure 3 is provided so as to fully isolate the conductive lines from the outside, thus making it possible to most minimize any effects due to external environmental factors.

Meanwhile, in order to selectively detect a strongly acidic poisonous chemical solution, for example, sulfuric acid, hydrochloric acid, nitric acid, hydrofluoric acid, etc., the device for detecting a leakage of acidic solution according to the present invention may include, but is not limited to, a base film layer which is made of a film material; a pair of conductive lines which are formed lengthwise in parallel with each other on an upper surface of the base film layer, wherein the base film layer is made of a synthetic resin, and the conductive lines are made in such a way that 60∼90% by weight of a CNT (Carbon Nano Tube) dispersion and 10∼50% by weight of an acryl alkyd resin mixed with a volatile solvent are mixed and printed by a printing method.

Since the basic configuration of the above embodiment is same as the configuration described along with Figures 1 and 2, the configurations of the base film layer 110, the conductive lines 111 and 112 and the upper protection film layer 120 will be described hereinafter.

First, a poisonous and strongly acidic solution has an electrical conductivity like water. If it leaks into soil or air, water contamination, soil contamination, air contamination, etc. may occur, thus causing any physical damages or damages to people.

For this reason, it needs to detect a leakage of such acidic solution quickly and at low cost. To this end, the present invention may be configured in the way that the base film layer 110, the conductive lines 111 and 112, and the upper side protection film layer 120 should not be dissolved by poisonous and strongly acidic chemical solution, for example, sulfuric acid, hydrochloric acid, nitric acid, hydrofluoric acid, etc. which namely are acidic solution.

To this end, the base film 110 is made of a synthetic resin, for example, PC, PP, PE, PET, PTFE (Teflon) materials, etc. The thickness of the base film 110 is 100∼250µm.

If the base film layer 110 is formed of a synthetic resin, for example, PC, PP, PTFE, etc. which is not easily dissolved by strong acid, it is preferred that the thickness thereof is 100∼130µm, and if the base film layer 110 is formed of a synthetic resin, for example, PE, PET, etc. which can be easily dissolved by strong acid, it is preferred that the thickness thereof is 130∼250µm.

The compositions of the conductive lines 111 and 112 are mixed with a CNT (Carbon Nano Tube) dispersion which has conductivity, and an acryl alkyd resin mixed with a volatile solvent. In this case, 60∼90% by weight of the CNT dispersion and 10∼50% by weight of acryl alkyd resin mixed with a volatile solvent are mixed, thus preparing a CNT ink, and the thusly prepared CNT ink is printed on the base film layer 110 by the gravure printing method, thus forming the conductive lines 111 and 112.
Here, the acryl alkyd resin mixture is formed of 40∼60% by weight of acryl alkyd resin and 40∼60% by weight of a volatile solvent. The acryl alkyd resin is strong to strong acid and has a strong adhering power when printing. The volatile solvent allows to increase volatile when printing, thus making easy the printing work.

The CNT dispersion is prepared in a paste form in the way that the total 85% by weight is calculated as 100% by weight, and within the amount of the thusly calculated 100% by weight, 1∼10% by weight of the CNT powder, 80∼98% by weight of ethyl cellosolve solvent and 1∼10% by weight of nonionic surfactant dispersion are mixed. The CNT powder has conductivity, and the ethyl cellosolve solvent and the nonionic surfactant dispersion allow to stabilize the structures of the carbon nano tube (CNT), while making particles uniform.

The CNT ink mixed with the CNT dispersion and the acryl alkyd resin mixture is printed by the gravure printing method, thus forming conductive lines 111 and 112. At this time, the thickness of each conductive line 111 and 112 is 8∼12µm.

The upper side protection film layer 120 is formed of a synthetic resin, for example, PC, PP, PE, PET, Teflon material, etc. which are strong to strongly acidic solution, and the thickness of the upper side protection film layer 120 is 100∼250µm.

Like the base film layer 110, if the upper side protection film layer 120 is formed of PC, PP, PTFE, etc. which are not easily dissolved by strong acid, it is preferred that the thickness thereof is 100∼130µm, and if the upper side protection film layer 120 is formed of a synthetic resin, for example, PE, PET, etc. which are easily dissolved by strong acid, it is preferred that the thickness thereof is 130∼250µm.

Therefore, if a strongly acid solution leaks, the strong acid solution is inputted through the sensing holes 131 formed where the leakage had occurred, so the two conductive lines 111 and 112 become conductive, which causes a change in resistance values.

Therefore, the distant controller will receive such a change in the resistance value in the conductive states, thus checking any leakage of the strongly acidic solution.
As illustrated in Figure 3, a coating layer 200 is formed with the aid of a resin material, for example, enamel, alkyd resin, PE, PET, etc. which can be easily dissolved by strong acid, so that the upper sides of the conductive lines 111 and 112 can be covered. The coating layer 200 is a substance which can be easily dissolved by a strongly acidic solution, but is not dissolved by water.

Therefore, if water inputs, the conductive lines 111 and 112 don't become conductive with the aid of the coating layer 200. Only when a strongly acidic solution inputs, the coating layer 200 is dissolved, and the conductive lines 111 and 112 printed by the CNT ink expose and become conductive, thus detecting any leakage of the strongly acidic solution.

At this time, the thickness of the coating layer 200 is 16∼18µm.

## Claims

1. A device for detecting a leakage of acidic solution, comprising:
a base film layer which is made of a film material;
a pair of conductive lines which are formed lengthwise in parallel with each other on an upper surface of the base film layer; and
a coating layer which is coated on an upper surface of the base film layer so that the conductive lines don't expose to the outside by a substance which is dissolved by the acidic solution.

2. The device of claim 1, wherein an upper side protection film layer made of a film material is laminated on an upper surface of the coating layer, and sensing holes are formed at regular intervals on the upper side protection layer so as to expose upward the conductive lines of the base film layer.

3. A device for detecting a leakage of acidic solution, comprising:
a base film layer which is made of a film material;
a pair of conductive lines which are formed lengthwise in parallel with each other on an upper surface of the base film layer;
an upper side protection film layer which is laminated on an upper surface of the base film layer on which the conductive lines are formed, wherein sensing holes are formed at regular intervals so as to expose the conductive lines of the base film layer; and
a coating layer which is formed of a substance which is dissolved by an acidic solution and is coated on an upper surface of the upper side protection film layer.

4. A device for detecting a leakage of acidic solution, comprising:
a pair of conductive lines which are formed lengthwise in parallel with each other on an upper surface of a base film layer which is made of a film material; and
an upper side protection film layer which is laminated on an upper surface of the base film layer, wherein sensing holes are formed at regular intervals on the upper side protection film layer so as to expose the conductive lines, wherein the sensing holes of the upper side protection film layer are closed by a substance which can be dissolved by an acidic solution.

5. A device for detecting a leakage of strongly acidic solution, comprising:
a base film layer which is made of a film material;
a pair of conductive lines which are formed lengthwise in parallel with each other on an upper surface of the base film layer, wherein the base film layer is made of a synthetic resin, and the conductive lines are made in such a way that 60∼90% by weight of a CNT (Carbon Nano Tube) dispersion and 10∼50% by weight of an acryl alkyd resin mixed with a volatile solvent are mixed and printed by a printing method.

6. The device of claim 5, wherein the CNT dispersion is formed by mixing 1∼10% by weight of a CNT powder, 80∼98% by weight of an ethyl cellosolve solvent and 1∼10% by weight of a nonionic surfactant dispersion.

7. The device of claim 5, wherein a coating layer made of enamel or alkyd resin or a resin, for example, PE, PET, etc. is formed to cover the conductive lines.
